Europäisches Patentamt

(19) European Patent Office

Office européen des brevets

(11) Publication number: **0 254 287 B1**

(12) **EUROPEAN PATENT SPECIFICATION**

(45) Date of publication of patent specification: **08.01.92**   (51) Int. Cl.⁵: **F16B 7/04**

(21) Application number: **87110598.7**

(22) Date of filing: **22.07.87**

㊴ **Locks.**

(30) Priority: **23.07.86 AU 7101/86**

(43) Date of publication of application:
**27.01.88 Bulletin 88/04**

(45) Publication of the grant of the patent:
**08.01.92 Bulletin 92/02**

(84) Designated Contracting States:
**BE DE ES FR GB IT NL SE**

(56) References cited:
**EP-A- 0 166 794**
**DE-A- 3 128 595**

(73) Proprietor: **Klaric, Valda Louise**
**11 Martin Court**
**Toorak, Victoria(AU)**

(72) Inventor: **Klaric, Valda Louise**
**11 Martin Court**
**Toorak, Victoria(AU)**

(74) Representative: **Brown, John David et al**
**FORRESTER & BOEHMERT Widenmayer-**
**strasse 4/I**
**W-8000 München 22(DE)**

Rank Xerox (UK) Business Services

**Description**

The present invention relates to locks, and more particularly locks of the type generally described in AU-B-552,608 (herein called the '608 lock').

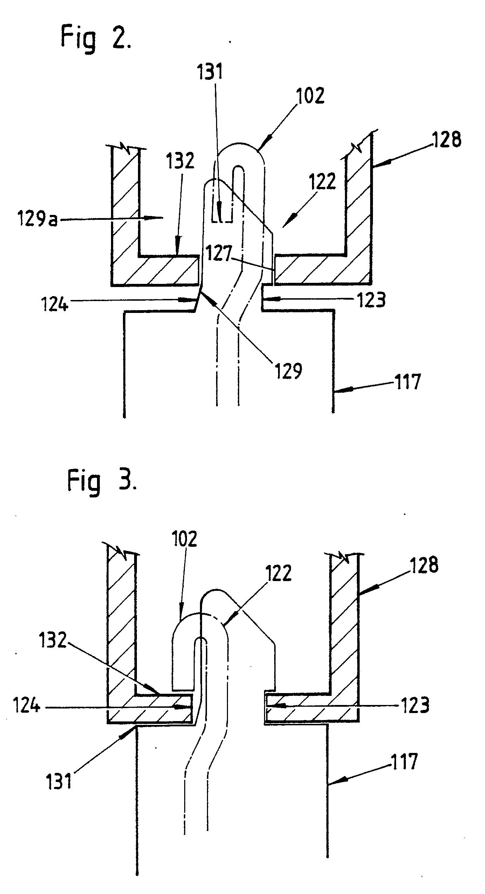

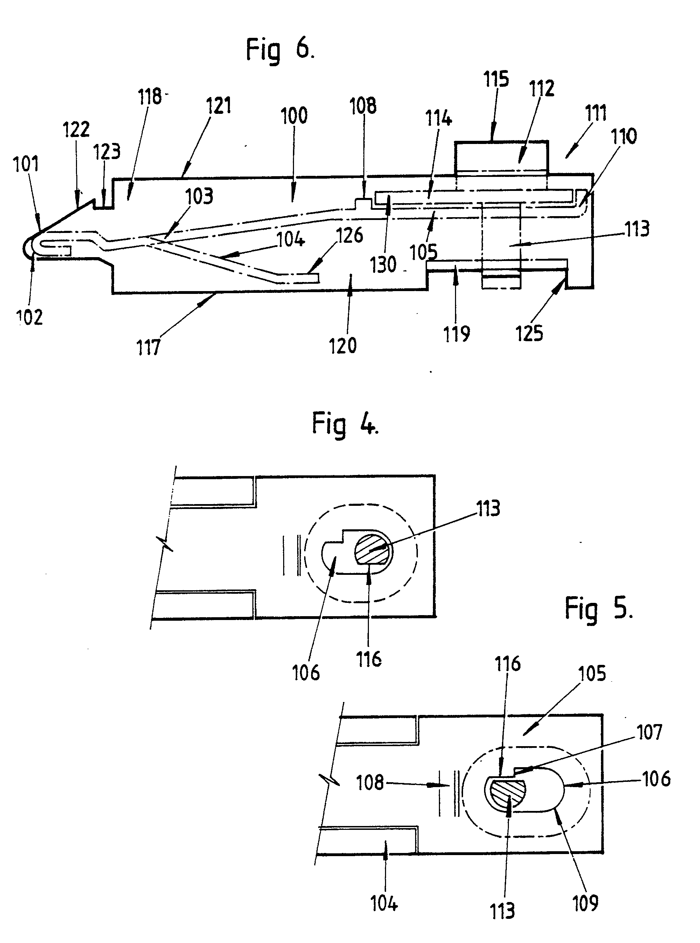

The 608 lock suffers from several disadvantages. First of all, whilst the lock when in position in a profile bar is not prone to inadvertent withdrawal from or sliding movement with respect to the bar, there is some tendency for the lock to wobble in an up/down direction (see, for example, figures 3 and 4 of the 608 specification). Moreover, the eccentric pin upon rotation can be subject to inadvertent forcing with consequential distortion of the bearing housing.

EP-A-0166794 discloses a locking apparatus having a pin with an eccentric surface, disposed in a stepped slot in a locking bar. The pin is rotated to move the locking bar back and forth, the locking position being achieved when a flat side of the eccentric surface contacts the side of the slot in what may be a jamming, rather than abutment, action.

It is with these disadvantages in mind that modifications have been made. The present invention addresses one modification directed at overcoming the second-mentioned disadvantage. (A further application deals with a separate invention centred around and stemming from the first-mentioned disadvantage).

According to the present invention there is provided a locking apparatus for use in attaching a bar means to a slotted profile bar means in which said profile bar means has at least one undercut longitudinal slot, comprising two different kinds of coupling means for engaging in a slot in said profile bar means and to be clamped therein, said coupling means including a holding member and a coupling hook arranged between two projections, said projections being mounted on the end of the holding member, said coupling hook being mounted on the end of a movable slotted strip member longitudinally and laterally movable in the bar means, which locking apparatus comprises a pin passing through a slot formed with a step in the holding member and being rotatably supported therein, said pin extending transversely relative to the profile bar and the holding means, and having an eccentric disc adapted to engage the strip member, said eccentric disc upon rotational movement of said pin moving said strip and coupling hook in a longitudinal and lateral direction of the holding member, said coupling hook including a free end engageable with an inside wall of the profile bar means and said projections also engaging with the inside wall of the profile bar means to lock the bar means to the profile bar means, characterised in that said pin is formed with a flat surface and, said flat surface being engageable with said step means upon rotation of said pin and consequent longitudinal locking movement of the strip member, said engagement ensuring that inadvertent rotation of the pin beyond the normal locking position is avoided without detriment to the normal locking of the bar means and the profile bar means.

In order that the present invention may be more fully described, reference is made to a preferred embodiment. This embodiment is illustrated in the accompanying drawings in which:

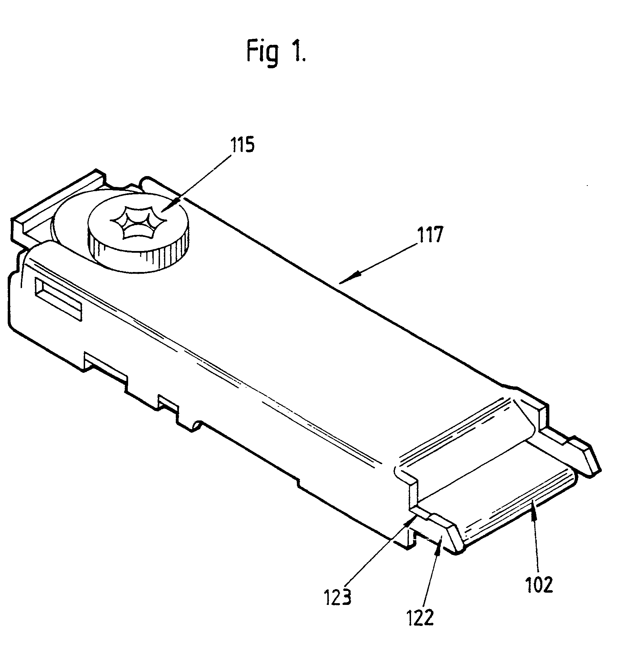

FIGURE 1 is a perspective view of the lock of this invention;

FIGURE 2 is a part cross-sectional view showing the securing end of the lock in an inserted but unlocked state;

FIGURE 3 is a similar view save that the lock is in a locked state;

FIGURE 4 is a cross-sectional plan elevation showing the eccentric pin journal disposition corresponding to the unlocked state of Figure 2;

FIGURE 5 is a similar view save that the disposition corresponds to the locked state of Figure 3; and

FIGURE 6 is a side elevation of the lock.

The holding member assumes the form of a sheet metal strip 100. The front end 101 of the strip is provided with a rearwardly bent hook 102. From the adjacent centre section 103 of the strip, a pair of resilient tongues 104 flanking the centre section are cut out and then bent out of the plane of that section. The inner end 105 of the strip - that is, that end remote from the hook 102 - may be described as a control section. This section has a slot 106 out out of it, and the edge of the slot facing the centre section 103 is stepped as at 107 to break the generally oval configuration of the slot. Adjacent the facing slot edge is a small raised hump section 108; adjacent the opposite slot edge 109, and indeed at the end of the strip, is a central bevelled edge 110. The hump 108 and edge 110 define there-between a space dimensioned to snugly accept the head of the eccentric pin further particulars of which are set out below.

The pin 113 extends from a circular head 112 and includes an eccentric disc 114. The top surface 115 of the pin head has a suitably profiled recess (not shown) to accommodate the head of a screwdriver or like tool by means of which the pin may be rotated. The pin 113, at a location next to the underside of the eccentric disc 114, is slotted to thereby form a flat surface 116. This may best be seen in Figures 4 and 5 where, for convenience, the pin only is illustrated (by hatching). In Figure 5 it may be noted that the pin is unable to be rotated beyond 180° from the Figure 4 position. The flat 116 is simply arrested by the step 107.

The bearing housing is generally designated as 117. It is of generally rectangular shape, with a cross-section adapted to match the hollow section of one of the profile bars to which it is to be fitted. The housing consists actually of two parts, a principal part 118 and a secondary part 119. The latter is a flat plate appropriately apertured to accommodate the end of the pin 113. The plate is suitably secured to the principal part 118 by the provision of a pair of turned over lugs (not shown) on the part 118.

The part 118 is of generally inverted U-shaped configuration throughout its length (with reference to Figure 6). Side walls 120 and a flat top 121 provide the bulk of the part 118. Two small wings 122 extend forwardly of the side walls and these wings, when the lock is assembled, flank the hook 102. Each wing is provided with a stepped indent 123 and, opposite thereto, a sloping ramp 124 (see Figure 2). The side walls 120 are slotted 125, near the rear ends of the walls, and a part of the plate 119, again when the lock is assembled, is seated on the bases of the slots. These slot bases are, however, modified to the extent of having the aforementioned securing turned over lugs. The rear ends of the side walls include turned in lugs (not shown) which serve to locate the plate 119 and prevent inadvertent longitudinal movement with respect to the bearing housing. Intermediate the ends of the side walls are further inturned lugs (not shown), this time extending in a plane parallel to that of the top 121. These lugs constitute bearing surfaces for the free ends 126 of the tongues 104.

Locking of the lock in position is a very simple operation. The lock, with the strip 100 and the pin 113 in the positions shown in Figures 2 and 4, respectively, is inserted into the slot 127 of the profile bar 128 to the point where the leading end 129 of the ramp 124 is adjacent a facing edge of one of the slot walls (see Figure 2). The hook 102, at this point, bears against a base of the channel 129a, so preventing the wings 122 from further entering the channel. At this point, the eccentric disc 114 occupies the position shown in Figure 6 - that is, with the longer reach 130 of the disc extending in a forwards direction. The pin 113 is then turned through 180° and the longer reach of eccentric disc 114 in thus turning bears on the bevelled edge 110 of the strip 100, so progressively forcing the edge and hence the strip as a whole in a rearwards (or retracting) direction. The positions adopted by the hook 102 and the pin 113 pursuant to this turning are those illustrated in Figures 3 and 5, respectively. With the attendant retraction of the hook 102, the wings 122 are able to penetrate the channel 129a to a maximum extent. During the locking process, the wings are 'guided' towards the Figure 3 position under the influence of the ramp 124. The net result is a positive locking of the wings within the channel by virtue of the stepped indent 123. This movement of the wings is matched by movement of the hook 102 in both a retracting direction (as previously stated) and a lateral direction, the latter however in an opposite sense to that, albeit relatively slight, of the wings. The lateral movement of the hook ensures that the free end 131 engages firmly with the inside wall 132 of the profile bar 128. There is then a 'nice' counterbalance between the free end 131 and the indent 123, the effect of which is a positive locking state and little or no tendency for wobble in the bearing housing 117.

For further details of the relative disposition and movement of the three basic parts of the lock - namely, the strip 100, the pin 113 and the bearing housing 117 - regard can be had to the description in AU-B-552,608.

## Claims

1. A locking apparatus for use in attaching a bar means to a slotted profile bar means 128 in which said profile bar means has at least one undercut longitudinal slot 127, comprising two different kinds of coupling means for engaging in a slot in said profile bar means and to be clamped therein, said coupling means including a holding member 118 and a coupling hook 102 arranged between two projections 122, said projections being mounted on the end of the holding member, said coupling hook being mounted on the end of a movable slotted strip member 100 longitudinally and laterally movable in the bar means, which locking apparatus comprises a pin 113 passing through a slot 106 formed with a step 107 in the holding member and being rotatably supported therein, said pin extending transversely relative to the profile bar and the holding means, and having an eccentric disc 114 adapted to engage the strip member 100, said eccentric disc 114 upon rotational movement of said pin 113 moving said strip and coupling hook 102 in a longitudinal and lateral direction of the holding member 118, said coupling hook including a free end 131 engageable with an inside wall 132 of the profile bar means and said projections 122 also engaging with the inside wall of the profile bar means to lock the bar means to the profile bar means, characterised in that said pin 113 is formed with a flat surface 116 said flat surface being engageable with said step 107 upon rotation of said pin 113 and consequent longitudinal locking movement of the strip member 100, said engagement ensuring that inadvertent rotation of the pin beyond the normal locking position is avoided without detriment to the normal locking of the bar means and the profile bar means.

**Revendications**

1. Appareil de verrouillage propre à être utilisé pour attacher une barre à une barre profilée 128 à fente dans lequel la barre profilée a au moins une fente 127 longitudinale en entaille, comprenant deux sortes différentes de moyens de couplage pour coopérer avec une fente de ladite barre profilée et pour être fixés dans ladite fente, lesdits moyens de couplage comprenant un élément de maintien 118 et un crochet de couplage 102 agencé entre deux parties en saillie 122, lesdites parties en saillie étant montées sur l'extrémité de l'élément de maintien, ledit crochet de couplage étant monté sur l'extrémité d'un élément mobile à fente 100 mobile longitudinalement et latéralement dans ladite barre, ledit appareil de verrouillage comprenant une cheville 113 passant au travers d'une fente 106 formée avec un redant 107 dans l'élément de maintien et étant supporté de façon rotative à l'intérieur dudit élément de maintien, ladite cheville s'étendant transversalement par rapport à la barre profilée et aux moyens de maintien, et ayant un disque excentrique 114 agencé pour coopérer avec l'élément en forme de bande 100, ledit disque excentrique 114 lors de la rotation de ladite cheville 113 déplaçant ladite bande et ledit crochet de couplage 102 dans une direction longitudinale et latérale de l'élément de maintien 118, ledit crochet de couplage comprenant une extrémité libre 131 propre à coopérer avec une paroi interne 132 de la barre profilée et lesdites parties en saillie 122 coopérant également avec la paroi interne de la barre profilée pour verrouiller la barre avec la barre profilée, caractérisé en ce que ladite cheville 113 est formée avec une surface plate 116, ladite surface plate étant propre à coopérer avec ledit redant 107 lors de la rotation de ladite cheville 113 et du mouvement de blocage longitudinal conséquent de l'élément en forme de bande 100, ledit engagement permettant d'éviter la rotation par inadvertance de la cheville au-delà de la position normale de blocage sans que cela soit au détriment du blocage normal de la barre et de la barre profilée.

**Patentansprüche**

1. Verbindungsvorrichtung zur Verwendung beim Befestigen einer Stangeneinrichtung an einer geschlitzten Profilstangeneinrichtung (128), bei der die Profilstangeneinrichtung wenigstens einen hinterschnittenen Längsschlitz (127) aufweist, mit zwei unterschiedlichen Arten von Kupplungseinrichtungen zum Eingriff in einen Schlitz in der Profilstangeneinrichtung und um darin verklemmt zu werden, wobei die Kupplungseinrichtung ein Halteelement (118) und einen Kupplungshaken (102) umfaßt, der zwischen zwei Vorsprüngen (122) angeordnet ist, wobei die Vorsprünge an den Enden des Halteelementes angebracht sind, wobei der Kupplungshaken auf dem Ende eines bewegbaren geschlitzten Streifenelementes (100) angebracht ist, das in der Stangeneinrichtung in Längsrichtung und in seitlicher Richtung bewegbar ist, wobei die Verbindungsvorrichtung einen Stift (113) aufweist, der durch einen Schlitz (106), welcher mit einer Stufe (107) in dem Halteelement ausgebildet ist, läuft und drehbar darin getragen ist, wobei der Stift sich in Querrichtung in bezug auf die Profilstangen- und die Halteeinrichtung erstreckt und eine exzentrische Scheibe (114) aufweist, die zum Eingriff in das Streifenelement (100) ausgelegt ist, wobei die exzentrische Scheibe (114) bei Drehbewegung des Stiftes (113) den Streifen und den Kupplungshaken (112) in einer Längsrichtung und einer seitlichen Richtung des Halteelementes (118) bewegt, wobei der Kupplungshaken ein freies Ende (131) umfaßt, der mit einer Innenwand (132) der Profilstangeneinrichtung in Eingriff bringbar ist und wobei auch die Vorsprünge (122) mit der Innenwand der Profilstangeneinrichtung in Eingriff sind, um die Stangeneinrichtung mit 1841 der Profilstangeneinrichtung zu verbinden, dadurch **gekennzeichnet,** daß der Stift (113) mit einer ebenen Fläche (116) ausgebildet ist, wobei die ebene Fläche mit der Stufe (107) bei Drehung des Stiftes (113) in Eingriff bringbar ist und die Verbindungsbewegung des Streifenelementes (100) in Längsrichtung nach sich zieht, wobei der Eingriff sicherstellt, daß eine versehentliche Drehung des Stiftes über die normale Verbindungsposition hinaus ohne Nachteil für das normale Verbinden der Stangeneinrichtung und der Profilstangeneinrichtung vermieden wird.

# Fig 1.

115

117

123

122

102

Fig 2.

Fig 3.

Fig 6.

Fig 4.

Fig 5.